Europäisches Patentamt

European Patent Office

Office européen des brevets

(19)

(11) Veröffentlichungsnummer: **0 031 533**
**B1**

(12)

# EUROPÄISCHE PATENTSCHRIFT

(45) Veröffentlichungstag der Patentschrift:
25.04.84

(51) Int. Cl.³: **C 08 G 14/10**, C 08 L 61/34,
C 09 J 3/16

(21) Anmeldenummer: 80107894.0

(22) Anmeldetag: 13.12.80

(54) Verfahren zur Herstellung von Mischkondensaten.

(30) Priorität: 22.12.79 DE 2951957

(43) Veröffentlichungstag der Anmeldung:
08.07.81 Patentblatt 81/27

(45) Bekanntmachung des Hinweises auf die Patenterteilung:
25.04.84 Patentblatt 84/17

(84) Benannte Vertragsstaaten:
AT BE DE FR IT NL SE

(56) Entgegenhaltungen:
AT - B - 296 470
DE - A - 2 020 481
DE - A - 2 305 983
GB - A - 2 027 439

Patents Abstracts of Japan Band 1, Nr. 126, 21. Oktober
1978, Seite 2615C78
Patents Abstracts of Japan Band 1, Nr. 93, 29. Juli 1978
Seite 1587C78

Die Akte enthält technische Angaben, die nach dem
Eingang der Anmeldung eingereicht wurden und die
nicht in dieser Patentschrift enthalten sind.

(73) Patentinhaber: BASF Aktiengesellschaft,
Carl-Bosch-Strasse 38, D-6700 Ludwigshafen (DE)

(72) Erfinder: Schatz, Hermann, Neubergstrasse 50,
D-6730 Neustadt (DE)
Erfinder: Dudeck, Christian, Dr., Odenwaldring 20,
D-6703 Limburgerhof (DE)
Erfinder: Diem, Hans, Dr., Feldbergstrasse 63,
D-6800 Mannheim (DE)
Erfinder: Mayer, Johann, Dr., Am Mandelgarten 5,
D-6713 Freinsheim (DE)
Erfinder: Schmidt-Hellerau, Christof,
Rheinrugenstrasse 45, D-6700 Ludwigshafen (DE)

## Verfahren zur Herstellung von Mischkondensaten

In der japanischen Patentanmeldung 53-56291 wird beschrieben, daß man Phenol mit — pro Mol — 4 bis 12 Mol Formaldehyd in Gegenwart von Magnesiumcarbonat und anschließend mit 2 bis 5 Mol Melamin umsetzen kann.

Die Nacharbeitung hat ergeben, daß mit handelsüblichem Magnesiumcarbonat eine Umsetzung der behaupteten Art nicht eintritt.

Für die Lösung der nachstehend erläuterten Aufgabe lassen sich indes aus diesem Sachverhalt keine näheren Hinweise entnehmen.

Aus der DE-PS 2 020 481 sind Mischkondensate von Melamin, Harnstoff und Phenol mit Formaldehyd bekannt, die sich in Form ihrer wäßrigen Lösungen als Bindemittel (Leime, Klebstoffe) für die Holzverleimung eignen und gegenüber den für diesen Zweck allgemein bekannten Harnstoffharzen durch eine wesentlich erhöhte Wasserbeständigkeit auszeichnen.

Beispielsweise lassen sich mit solchen Mischkondensaten Holzspanplatten herstellen, die sogar der ständigen Freibewitterung lange Zeit standhalten.

In der Absicht, die Herstellung solcher Harze zu vereinfachen und günstigere Harzeigenschaften zu erzielen, ist in der DE-AS 2 305 983 vorgeschlagen worden, das relativ komplizierte Verfahren der Mischkondensation von Phenol, Harnstoff, Melamin und Formaldehyd nur mit einer Teilmenge der Aminoplastbildner vorzunehmen und das erhaltene Mischkondensat mit einem üblichen Aminoplastharz abzumischen. Auf diese Weise läßt sich aber die angestrebte Qualität der Harze bezüglich Wasserfestigkeit nur unvollkommen erreichen und es ist nach wie vor erforderlich, wenn auch in verminderter Menge, eine Kondensation von 4 verschiedenen Stoffen, nämlich Melamin, Harnstoff, Phenol und Formaldehyd vorzunehmen, wobei in technischem Maßstab stets Dosier- und Überwachungsprobleme auftreten.

Andere Vorschläge zur Herstellung von Mischkondensaten aus Phenolen und Aminoplasten sind beispielsweise der DE-PS 891 023, der DE-OS 1 720 416, der CH-PS 445 859, sowie der US-PS 3 321 551 zu entnehmen, die jedoch sämtliche andere Ziele verfolgen als die vorliegende Erfindung und diese auch mit anderen Mitteln hinsichtlich Reaktionsführung und Reihenfolge sowie Menge der Reaktionsteilnehmer zu erreichen suchen.

Die Erfindung hat sich nämlich die Aufgabe gestellt, die Herstellung von Mischkondensaten bzw. Kondensatmischungen von Formaldehyd mit Phenol, Melamin und Harnstoff zu vereinfachen und dabei Harze zu erzielen, die nach der Verarbeitung als Holzleime eine geringere Menge an Formaldehyd freisetzen, als dies bisher möglich zu sein schien.

Die Erfindung betrifft ein Verfahren zur Herstellung von Mischkondensaten von Phenol und Melamin mit Formaldehyd in wäßriger Lösung, bei dem man Formaldehyd und Phenol im Molverhältnis von 4 : 1 bis 10 : 1 in an sich bekannter Weise in wäßriger Lösung bei einem anfänglichen pH-Wert von wenigstens 7,5 bis zur eben noch unbegrenzten Wasserverdünnbarkeit (bzw. begrenzter Verdünnbarkeit mit 5%iger Magnesiumsulfatlösung) kondensiert und das so erhaltene wäßrige Kondensat mit mindestens 0,3 Mol Melamin je Mol Formaldehyd bei einem pH-Wert von 7,5 bis 10 bis zu begrenzter Wasserverdünnbarkeit kondensiert mit der Maßgabe, daß die Menge an Formaldehyd, bezogen auf die Molsumme von Melamin und Phenol, mindestens 1,5 beträgt.

Ein so erhaltenes Mischkondensat ist mit üblichen Harnstoffharz-Lösungen in allen Verhältnissen mischbar.

Für die Zwecke der wetterfesten Verleimung kann es für sich allein verwendet werden.

Aus wirtschaftlichen Gründen ist es jedoch möglich, Mischungen mit Harnstoffharz-Lösungen herzustellen, die bis zu 70% (bezogen auf das jeweilige Feststoffgewicht der Harze) Harnstoffharz enthalten, ohne daß die Wetterfestigkeit verleihenden Eigenschaften verlorengehen.

Erfindungsgemäß erhält man zunächst durch Kondensation von Phenol mit überschüssigem Formaldehyd und anschließende Einkondensation von Melamin unter alkalischen Bedingungen in einem Arbeitsgang Mischkondensate von Phenol und Melamin mit Formaldehyd, die sich mit handelsüblichen Harnstoffharzen abmischen lassen und vorzügliche, wetterfeste Holzleime darstellen, sei es für sich, sei es in Form der Mischung mit Harnstoffharzen.

Das Kondensat von Phenol, Melamin und Formaldehyd sollte ein Molverhältnis von Formaldehyd zu den Kondensationspartnern von etwa 1,5 bis 2,2 zu 1 aufweisen, woraus folgt, daß der Anteil an Melamin, bezogen auf die Molsumme von Phenol und Melamin im Bereich von etwa 0,4 bis 0,9 liegt.

Dabei soll zweckmäßig ein Gesamtmolverhältnis in der fertigen Kondensat-Mischung von 1,1 bis 2,5, bevorzugt 1,1 bis 1,7, mol Formaldehyd, bezogen auf die Molsumme von Melamin, Harnstoff und Phenol und ein Molverhältnis von 0,05 bis 0,5 mol Phenol zu einem Mol der Summe aus Melamin und Harnstoff eingehalten werden, wobei der Anteil an Melamin im Bereich von 0,1 bis 0,9 mol und der Anteil an Harnstoff entsprechend im Bereich von 0,9 bis 0,1 mol liegt.

In der Kondensatmischung ist ein Molanteil des Melamins an der Summe von Melamin und Harnstoff von 0,9 bis 0,2 und insbesondere von 0,9 bis 0,3 bevorzugt.

Es versteht sich, daß die Mitverwendung von geringeren Mengen Harnstoff auf der Stufe der Herstellung der phenolhaltigen Harzkomponente zwar nicht erstrebenswert ist, jedoch den Erfolg nicht ausschließt, sofern die Reihenfolge der Kondensationsschritte, d. h. die Vorwegreaktion von Phenol mit Formaldehyd eingehalten wird.

Die Verfahrensführung gestaltet sich zweckmäßig im einzelnen wie folgt:

Zunächst setzt man — absatzweise oder fortlaufend — Phenol mit überschüssiger wäßriger Formaldehydlösung in der Wärme um, wobei soviel Alkalilauge zugegeben wird, daß sich ein pH-Wert von 8,5 oder mehr einstellt. Bei Bedarf wird in mehreren Einzelportionen Alkalilauge bis jeweils zu einem pH-Wert um 9 zugefügt und der Kondensationsfortschritt mit 5%iger Bittersalzlösung überwacht.

Man läßt abkühlen und setzt soviel Melamin zu, daß sich ein Gesamt-Molverhältnis von Formaldehyd zur Molsumme aus Phenol und Melamin von etwa 1,75 (1,5 bis z. B. 2,2) ergibt.

Das eingerührte und aufgelöste Melamin läßt man unter pH-Kontrolle (ggf. Laugenzugabe) bis zur begrenzten Wasserverdünnbarkeit einkondensieren. Bei der technisch üblichen Harzkonzentration von etwa 55 bis 65% erreicht die Harzlösung dabei Viskositäten von etwa 200 bis 600 mPa.s (20° C).

Zur Abmischung mit den vorerwähnten Mischkondensaten sind die technisch üblichen Holzleime auf der Grundlage von Harnstoff-Formaldehyd-Kondensaten (UF) geeignet. Bevorzugt werden Kondensate mit einem Formaldehydgehalt, wie er heute bei alleiniger Verwendung von UF-Leim üblich ist, z. B. solche mit einem Molverhältnis von 1,1 bis 1,8 zu 1.

## Beispiel 1

4005 kg 40%ige wäßrige Formaldehydlösung werden mit 687 kg Phenol und 40 kg 50%iger Natronlauge versetzt, unter Rühren auf 90° C erhitzt und bei dieser Temperatur ca. 30 Minuten kondensiert. Die erhaltene Lösung wird auf 25° C abgekühlt und unter Rühren werden 2400 kg Melamin zugesetzt. Das Reaktionsgemisch wird bis 90° C aufgeheizt und bei 90 bis 95° C ca. 50 Minuten bis zu einer Viskosität von 300 mPas (20° C) umgesetzt. Zur Einhaltung eines konstanten pH-Wertes von 8,8 benötigt man insgesamt noch 6 kg 50%ige Natronlauge.

Die erhaltene Harzlösung wird auf 25° C abgekühlt und mit 5952 kg eines handelsüblichen wäßrigen Harnstoff-Formaldehyd-Leimharzes, welches ein Molverhältnis von Formaldehyd zu Harnstoff von 1,8 : 1 und einen Feststoffgehalt von 65% aufweist, abgemischt.

Die Leimharzmischung hat folgende Eigenschaften:

Viskosität: 550 mPas (20° C).
pH-Wert bei 20° C: 8,9.
Dichte bei 20° C: 1,278.
Feststoffgehalt: 63,5%.
Gelierzeit bei 50° C: 35 Minuten (nach Zusatz von 10% einer 15%igen $NH_4$-Cl-Lösung).
Lagerfähigkeit bei 20° C: mindestens 4 Wochen.

## Beispiel 2

5666 kg wäßrige 40%ige Formaldehydlösung werden mit 850 kg Phenol und 51 kg 50%iger Natronlauge versetzt, unter Rühren auf 90° C erhitzt und bei dieser Temperatur 30 Minuten vorkondensiert. Die erhaltene Lösung wird auf 25° C abgekühlt und unter Rühren werden 3400 kg Melamin zugesetzt. Das Reaktionsgemisch wird bis 90° C aufgeheizt und bei 90° C innerhalb 60 Minuten bis zu einer Viskosität von 350 mPas (20° C) umgesetzt. Zur Einhaltung eines konstanten pH-Wertes von 8,9 ist eine weitere Zugabe von 8 kg 50%iger Natronlauge erforderlich. Man kühlt auf 25° C ab und versetzt mit 7040 kg eines Harnstoff-Formaldehyd-Leimharzes, das wie folgt erhalten worden ist:

10 000 kg eines wäßrigen Vorkondensationsproduktes, das 4850 kg Formaldehyd im Molverhältnis 4 : 1 an Harnstoff gebunden enthält, wird mit 3230 kg Harnstoff-Lösung (68%ig, 70° C heiß) und 1310 kg Methanol gemischt, mit 25%iger Natronlauge auf einen pH-Wert von 7,3 eingestellt und unter Rühren auf 90° C erhitzt. Man beläßt das Reaktionsgemisch 10 Minuten bei dieser Temperatur, wobei der pH-Wert sinkt. Anschließend wird mit 20%iger Ameisensäure ein pH-Wert von 4,5 eingestellt und bei 90 bis 98° C bis zu einem Trübungspunkt von 25° C (1 Teil Reaktionsgemisch verdünnt mit 5 Teilen heißem Wasser) kondensiert. Die Kondensation verläuft in etwa 50 Minuten.

Nach Erreichen des Trübungspunktes wird die Reaktion durch Zugabe von 25%iger Natronlauge bis zum pH-Wert 7,5 abgebrochen und es werden 3120 kg heiße Harnstoff-Lösung zugefügt. Nach Kühlung auf 50° C werden unter vermindertem Druck 3700 kg Wasser abdestilliert und anschließend nochmals 3120 kg Harnstofflösung zugefügt. Die so erhaltene Harzlösung wird rasch unter 20° C gekühlt. Sie hat (bei 20° C) folgende Eigenschaften:

| | |
|---|---|
| Wasserverträglichkeit | 1 : 3,5 |
| Viskosität | 662 mPas |
| pH-Wert | 8,6 |
| Lagerstabilität | mind. 3 Monate |
| Dichte | 1,2775 g/cm$^3$ |

Gelierzeit (bei 50° C)  113 min
(nach Zusatz von 10%
einer 15%igen
NH$_4$Cl-Lösung)

Die Mischung hat folgende Eigenschaften:

Viskosität: 484 mPas (20° C).
Dichte bei 20° C: 1,272 g/cm$^3$.
pH-Wert bei 20° C: 8,9.
Feststoffgehalt: 62,8%.
Gelierzeit bei 50° C: 67 Minuten (nach Zusatz von 10% einer 15%igen NH$_4$Cl-Lösung).
Lagerfähigkeit bei 20° C: mindestens 4 Wochen.

## Beispiel 3

1548 kg wäßrige 40%ige Formaldehydlösung werden mit 250 kg Phenol und 13 kg 50%iger Natronlauge vermischt, auf 90° C gebracht und bei dieser Temperatur 30 Minuten gehalten bis ein Tropfen der Lösung in 5%iger Bittersalzlösung eine Trübung erzeugt. Man läßt auf 25° C abkühlen und setzt unter Rühren 1000 kg Melamin zu. Das Gemisch wird auf 90° C aufgeheizt und bei dieser Temperatur innerhalb 60 Minuten bis zu einer Viskosität von 400 mPas (20° C) belassen, wobei durch Zugabe von insgesamt 3 kg 50%ige Natronlauge ein konstanter pH-Wert von 8,9 eingehalten wird.
Die Harzlösung wird auf 25° C abgekühlt und mit 2190 kg eines Leimharzes, welches ein Molverhältnis von Formaldehyd zu Harnstoff von 1,1 : 1 und einen Feststoffgehalt von 66% aufweist, abgemischt.
Die Mischung hat folgende Eigenschaften:

Viskosität: 356 mPas (20° C).
pH-Wert bei 20° C: 9,0.
Dichte bei 20° C: 1,283 g/cm$^3$.
Feststoffgehalt: 63,7%.
Gelierzeit bei 50° C: 70 Minuten (nach Zugabe von 10% einer 15%igen NH$_4$Cl-Lösung).
Lagerfähigkeit bei 20° C: mindestens 6 Wochen.

## Beispiel 4

2620 g einer wäßrigen 40%igen Formaldehydlösung werden mit 500 g Phenol und 25 g einer 50%igen Natronlauge vermischt, auf 90° C erhitzt und bei dieser Temperatur 30 Minuten kondensiert, bis ein Tropfen des so hergestellten Vorkondensats in 5%iger Bittersalzlösung eine Trübung hervorruft. Das so hergestellte Vorkondensat wird auf 25° C abgekühlt und unter Rühren werden 2200 g Melamin zugesetzt. Das Reaktionsgemisch wird in einem geschlossenen Reaktionsgefäß auf 107° C aufgeheizt, wobei sich ein Druck von 1,3 bar einstellt.
Man kondensiert sodann unter Beibehaltung eines konstanten pH-Wertes von 8,8 innerhalb von 20 bis 30 Minuten bis zu einer Viskosität von 400 mPa.s (20° C). Die so hergestellte Harzlösung wird auf 25° C abgekühlt und mit 4655 g eines Harnstoff-Formaldehyd-Leimharzes, wie es im Beispiel 2 verwendet wurde, abgemischt.
Die Mischung hat folgende Eigenschaften:

| | |
|---|---|
| Viskosität | 500 mPa.s (20° C) |
| Dichte bei 20° C | 1,284 g/cm$^3$ |
| pH-Wert bei 20° C | 8,9 |
| Feststoffgehalt bei 50° C | 64% |
| Gelierzeit bei 50° C (nach Zusatz von 10% einer 15%igen NH$_4$Cl-Lösung) | 105 Minuten |
| Lagerfähigkeit bei 20° C | mindestens 6 Wochen |

**0 031 533**

**Patentansprüche**

1. Verfahren zur Herstellung von Mischkondensaten von Phenol und Melamin mit Formaldehyd in wäßriger Lösung, dadurch gekennzeichnet, daß man

a) Formaldehyd und Phenol im Molverhältnis von 4 : 1 bis 10 : 1 in an sich bekannter Weise in wäßriger Lösung bei einem anfänglichen pH-Wert von wenigstens 7,5 bis zur eben noch unbegrenzten Wasserverdünnbarkeit (bzw. begrenzter Verdünnbarkeit mit 5%iger Magnesiumsulfatlösung) kondensiert und

b) das so erhaltene wäßrige Kondensat mit mindestens 0,3 Mol Melamin je Mol Formaldehyd bei einem pH-Wert von 7,5 bis 10 bis zu begrenzter Wasserverdünnbarkeit kondensiert mit der Maßgabe, daß die Menge an Formaldehyd, bezogen auf die Molsumme von Melamin und Phenol mindestens 1,5 beträgt.

2. Mischung, enthaltend in wäßriger Lösung — bezogen auf deren Feststoffgehalt — bis zu 70% eines üblichen, zur Verwendung als Leimharz geeigneten Harnstoff-Formaldehydkondensates mit einem Molverhältnis von F : H zwischen 1,1 : 1 und 1,8 : 1 und wenigstens 30% eines Kondensates, wie es mit dem Verfahren gemäß Anspruch 1 erhältlich ist.

**Claims**

1. A process for the production of co-condensates of phenol and melamine with formaldehyde in aqueous solution, wherein

a) formaldehyde and phenol are condensed in a molar ratio of 4 : 1 to 10 : 1 in a conventional manner in aqueous solution at an initial pH of at least 7.5 until the condensate just exhibits unlimited dilutability with water (or limited dilutability with 5% strength magnesium sulfate solution), and

b) the aqueous condensate thus obtained is condensed with at least 0.3 mole of melamine per mole of formaldehyde at a pH of 7.5 to 10 until it exhibits limited dilutability with water, with the proviso that the amout of formaldehyde, based on the sum of the molar amounts of melamine and phenol, is at least 1.5.

2. A mixture containing in aqueous solution up to 70% of a conventional urea/formaldehyde resin suitable for use as an adhesive, the molar ratio of formaldehyde to urea being from 1.1 : 1 to 1.8 : 1, and at least 30% of a condensate at can be obtained by the process as claimed in claim 1, the percentages being based on the solids content of the solution.

**Revendications**

1. Procédé de préparation de condensats mélangés de phénol et de mélamine avec du formaldéhyde en solution aqueuse, caractérisé en ce que

a) on condense le formaldéhyde et le phénol à un rapport molaire de 4 : 1 à 10 : 1, de manière connue en soi, en solution aqueuse, à un pH initial d'au moins 7,5, jusqu'à une faculté de dilution à l'eau encore tout juste illimitée (ou une dilution limitée avec une solution de sulfate de magnésium à 5%) et

b) on condense le condensat aqueux ainsi obtenu avec au moins 0,3 mole de mélamine par mole de formaldéhyde à un pH de 7,5 à 10 jusqu'à une faculté de dilution limitée à l'eau, étant spécifié que la quantité de formaldéhyde, par rapport à la somme de moles de mélamine et de phénol, est d'au moins 1,5.

2. Mélange contenant en solution aqueuse — et exprimé en substances solides de cette solution — jusqu'à 70% d'un condensat usuel d'urée-formaldéhyde approprié à l'utilisation en tant que résine à coller, à un rapport molaire formaldéhyde/urée de 1,1 : 1 à 1,8 : 1, et au moins 30% d'un condensat obtenu par le procédé selon la revendication.